Europäisches Patentamt

**European Patent Office**

**Office européen des brevets**

(19)

(11) Publication number: **0 033 796**
A2

(12) # EUROPEAN PATENT APPLICATION

(21) Application number: **80301607.0**

(22) Date of filing: **16.05.80**

(51) Int. Cl.³: **E 04 C 2/06**, E 04 C 2/26

(30) Priority: **11.02.80 GB 8004436**

(71) Applicant: **CAPE BOARDS & PANELS LIMITED, Iver Lane, Cowley, Uxbridge Middlesex, UB8 2JQ (GB)**

(43) Date of publication of application: **19.08.81 Bulletin 81/33**

(72) Inventor: **Harper, Stephen, 174, Meadvale Road, Ealing London, W5 1LT (GB)**
Inventor: **Johnson, Andrew, 46, Westfield Road, Ealing London, W13 9GH (GB)**

(84) Designated Contracting States: **AT BE CH DE FR IT LI LU NL SE**

(74) Representative: **Votier, Sidney David et al, CARPMAELS & RANSFORD 43, Bloomsbury Square, London WC1A 2RA (GB)**

(54) Building boards and sheets, process and composition for producing them.

㊷ A board or sheet product having a density of at least 1300 Kg/m³ is formed from a non-asbestos composition comprising (i) an inorganic binder or the precursors thereof in an amount of at least 75% of the composition on a dry weight basis, and (ii) from 2 to 25%, on the same basis, of cotton having a freeness of 20–80° (Schopper Riegler). The cotton, which suitably comprises first cut linters, is preferably processed to a freeness of 25–40° S.R.

The impact resistance of the products may be improved by including in the initial mix synthetic organic fibres, e.g. polypropylene fibres.

ACTORUM AG

"BOARDS & SHEETS".

This invention relates to the manufacture of boards and sheets, especially for use in the building industry. The invention also relates to compositions for use in such manufacture.

It is well known to make building boards and sheets from compositions containing binders and reinforcing fillers. Many such compositions are known, and suitable binders include Portland cement and the family of binders known as the "calcium silicates", which latter are made by the reaction, under autoclaving conditions, of a calcareous component (which might be Portland cement) and a siliceous component. Typical fillers for such compositions are asbestos fibres, which are most useful in providing the ultimate products with both strength and fire-resistance, and asbestos-cement building boards and sheets have found much favour throughout the world.

The use at the present time of asbestos is thought, however, to create a health hazard, and the building industry is thus urgently seeking non-asbestos products which possess the advantages of asbestos-reinforced products but at the same time do not involve their disadvantages.

Asbestos-free compositions from which building boards and sheets may be manufactured are known. Indeed, the industry has recently appreciated the advantage of using cellulosic fibres as a replacement for asbestos fibres in such compositions and products. It is, however, a further requirement of the use of these non-asbestos materials that they should be capable of being formed into the required shape on machines which have hitherto been used for the manufacture of asbestos-cement boards and sheets. Such machines include the Hatschek machine, the Magnani machine, the Fourdrinier machine, the Head Box system and the injection moulding system (e.g. Ispra), all of which machines involve a dewatering technique. Thus, the manufacturing technique on such machines normally involves the initial formation of an aqueous slurry of the composition, the application of
this slurry to a continuously movable permeable belt or
mesh on the machine, the dewatering of the slurry and the
shaping of the dewatered slurry into the required form.
The Hatschek process for example involves the use of a
rotary sieve which picks up the slurry from a bath thereof and transfers it to a continuously moving permeable
belt from which it is then transferred as a thin layer
onto a rotating cylinder. When a sufficient thickness
of material has been transferred to the cylinder it is
removed therefrom as a wet board for subsequent processing.

Certain compositions for the production of non-
asbestos boards and sheets are not suitable for use with
the above machinery, since the loss of water during the
dewatering stage tends to be accompanied by a loss of
solids materials. It is an object of the invention to
provide a non-asbestos board or sheet product which may be
manufactured on existing types of machinery which involve a
dewatering stage.

According to the present invention there is provided
a board or sheet product having a density of at least
1300 $Kg/m^3$, and suitably not more than 1900 $Kg/m^3$, formed
from a non-asbestos composition comprising (i) an inorganic
binder or the precursors thereof in a amount of at least
75% of the composition on a dry weight basis, and (ii) from
2 to 25%, on the same basis, of cotton having a freeness of
20-80° (Schopper Riegler).

Further according to the invention, a method of making
a board or sheet comprises forming a wet pulp of the non-
asbestos composition mentioned immediately hereinbefore,
forming said pulp into the desired shape, and causing the
inorganic binder to set. One method comprises applying an
aqueous slurry of the composition to a continuously moving
permeable belt, removing water from the slurry and forming
the dewatered slurry into shape, and causing the binder to
set.

The binder is preferably Portland cement, a high alumina cement, or a "calcium silicate" binder, most preferably Portland cement. When we refer herein to a "calcium slilicate" binder we intend either the precursors thereof, i.e. a calcareous material and a siliceous material (e.g. lime and quartz) or a prereacted material comprising an intermediate reaction product of such calcareous and siliceous materials. The source of the calcareous material may be Portland cement.

The cotton may be of any type, including treated and untreated linters, cotton waste, and textile waste. The processing may include dispersal in water and treatment in a beater, refiner, Kollergang or mill, in order to modify the fibre length, degree of fibrillation and wetting to achieve the optimum drainage and strength characteristics within the above-quoted freeness range. The cotton is preferably processed to a freeness of 25-40° S.R., and is preferably chemically processed linter (preferably first cut) or unprocessed crude linter (preferably first cut), or staple cotton fibre, or waste cotton from cotton spinning or clothing manufacture.

The processed cotton is used in an amount of 2 to 25%, by weight, based on the weight of the dry mix, especially 4 to 15%, and especially 5 to 12%, on the same basis.

The composition used herein most suitably includes synthetic fibres, such as rayon, high tenacity rayon, polyester, e.g. "Terylene", polyvinyl chloride, polypropylene or polyamide (e.g. Nylon or Kevlar) fibres, which are found to improve the impact resistance of the final products. These fibres are preferably used in a amount of 0.1 to 5%, preferably 0.1 to 2%, by weight, based on the total weight of the dry mix. Rayon, high tenacity rayon, "Terylene" and "Kevlar" aromatic polyamide fibre are suitably used in amounts of 1 to 5%, by weight, on the dry mix. Polypropylene and Nylon particularly improve the impact resistance and are suitably used in amounts of

- 4 -

0.1 to 2%, by weight on the dry mix. The fibre length of the synthetic fibres is preferably in the range 6 to 40mms. The most preferred synthetic organic fibre is polypropylene, of drawn filament length 5-40mm. (preferably 20mm.) and denier 5-4000 (preferably 10). The polypropylene may alternatively be fibrillated, or may comprise waste polypropylene from the textile industry. A typical composition for the production of boards and sheets comprises, by weight on a dry basis, 8% processed cotton, 0.45% polypropylene, the balance being Portland cement and any other additions.

The composition also optionally contains inorganic fibres, for example glass fibres, mineral fibres such as rock wool fibres, and when present such fibres are suitably contained in an amount of 1 to 8%, most suitably 1.5 to 5%, by weight on the dry mix.

The initial composition also preferably includes a gelling agent, such as colloidal silica or a clay, which assists in preventing the loss of solids materials when the aqueous slurry is poured onto the permeable belt. Preferred clays are bentonite, attapulgite and sepiolite which also increases the plasticity of the wet pulp; suitable colloidal silicas are those sold under the trade names Cabosil, Gasil and Neosyl. The gelling agent is preferably used in amount of 1 to 20%, most preferably 1 to 10%, by weight, based on the total weight of the dry mix.

The initial composition also preferably includes flocculants, e.g. polyacrylamides, to control solids retention; and also cellulose derivatives such as carboxymethyl- and hydroxypropylmethyl-cellulose to control the drainage and plasticity of the wet pulp as it is being charged onto the permeable belt and formed to shape.

When making boards or sheets from compositions according to the invention an aqueous slurry of the composition is first formed. This slurry may have a solids content of 3 to 10% or higher, e.g. 35% by weight. The slurry may be heated slightly, e.g. to 25 to 40°C, and may contain small amounts of such additional ingredients as flocculants, to control raw material retention and as filtration aids, water retention aids, wetting agents, and setting controlling agents.

The slurry may then be formed into boards or sheets on, for example, a Hatschek, Magnani or Fourdrinier machine, a Head Box system or an injection moulding machine, and after the boards have been manufactured by use of these machines the binder is allowed to set off. It should be noted that the boards or sheets may either be flat or be corrugated, and if a corrugated sheet is required the still wet composition will be passed from the dewatering machine into a former of the shape required. The "green" sheet may be hand moulded to the desired shape, and furthermore the sheet may be post-pressed to give a final product of higher density. The invention is especially suitable for the formation of corrugated sheets.

The setting of the binder may be done by autoclaving, by air curing or by steam heating. When the binder is a "calcium silicate" binder the setting thereof may be done in an autoclave at pressures up to 350 p.s.i., and suitably at pressures up to 150 p.s.i., for periods ranging from 2 to 24 hours. When the binder is Portland cement or a high alumina cement, setting may be achieved by air curing or by steam heating in an oven at 80 to 90°C. and the maturing at room temperature or in heated rooms in the presence of humidity until products are obtained having the desired properties. The boards may then be immediately dried if desired.

The initial slurry may suitably be made up by hydra-pulping and dispersing the processed cotton and any synthetic fibres in water, followed by the addition of the binder, gelling agent and other additives where used, to form a slurry of approximately water:solids ratio 3:1 to 15:1. The slurry may then be further diluted with water to give a water:solids ratio of approximately 10:1 to 30:1. Boards are then made from this latter diluted slurry by dewatering on the relevant machine to give a water:solids ratio of approximately 1:3.

In certain cases it may be of advantage to form the inorganic binder just prior to mixing with the cotton and

- 6 -

other fibre, particularly when it is of the "calcium silicate" type. Thus, for example, lime (the calcareous component) and quartz (the siliceous component) may be prereacted in a stirred autoclave, and the processed cotton, any synthetic fibre and other additive(s) are then stirred into the aqueous system which is formed into the required shape as before.

A typical formulation which may be used for making a corrugated sheet with good flexural strength comprises, by weight on a dry basis:-

(a)  Portland cement              —        91.9%
     Processed cotton (25°S.R.)   —         6.0%
     Polypropylene                —         0.1%
     Bentonite                    —         2.0%

A typical formulation for making flat sheet with better flexural strength comprises, on a dry weight basis:-

(b)  Portland cement              —        85.5%
     Processed cotton (40°S.R.)   —         9.0%
     Polypropylene                —         0.5%
     Bentonite                    —         5.0%

Flat sheets were manufactured on a Hatschek machine from the composition set out below and had the properties quoted.

(c)  Portland cement              —        84.5% wt.
     Processed cotton (40°S.R.)   —        10.0%  "
     Nylon                        —         0.5%  "
     Colloidal silica             —         5.0%  "
     Density                      —      1445kg/m$^3$
     Modulus of Rupture           —        19.5MN/m$^2$
     Impact strength              —         4.6KJ/m$^2$

Corrugated sheets were also made from the following compositions:-

(d)    Processed cotton (35°S.R.)   -   8% wt.

Polypropylene   -   1.5% "

Bentonite   -   8% "

Portland cement   -   82.5% "

Density   -   $1475 kg/m^3$

Modulus of Rupture   -   $17.5 MN/m^3$

Impact strength   -   $8.0 KJ/m^3$

(e)    Processed cotton (35°S.R.)   -   10% "

Nylon   -   1% "

Attapulgite clay   -   7.5% "

Portland cement   -   81.5% "

Density   -   $1375 kg/m^3$

Modulus of Rupture   -   $19.5 MN/m^3$

Impact strength   -   $9.5 KJ/m^3$

The following compositions are also suitable for the manufacture of flat boards by a dewatering technique:-

(f)    Portland cement   -   89.9% by wt.

Processed cotton (35°S.R.)   -   6.0% "

Glass fibre (1.0cm)   -   2.0% "

Polypropylene   -   0.1% "

Bentonite   -   2.0% "

(g)    Portland cement   -   86.5% "

Processed cotton (30°S.R.)   -   4.0% "

Mineral fibre   -   5.0% "

Polypropylene   -   0.5% "

Bentonite   -   4.0% "

Boards were made from the following compositions:-

(h)    Lime   -   46.0% "

Silica   -   41.5% "

Processed cotton (35°S.R.)   -   4.0% "

Glass fibre (1.0cm)   -   4.0% "

- 8 -

| Polypropylene | – | 1.5% by wt. |
| Bentonite | – | 3.0% " |

The formed boards were autoclaved at 70 p.s.i. for 24 hours and the resulting products had a density of 1350 kg/m$^3$ and a modulus of rupture of 16.5 MN/m$^2$. Impact resistance 10 KJ/m$^2$.

Boards were made from the following composition:-

| (j) | Portland cement | – | 41.0% by wt. |
| | Silica | – | 44.0% " |
| | Processed cotton (35°S.R.) | – | 4.0% " |
| | Glass fibre | – | 1.5% " |
| | Polypropylene | – | 0.5% " |
| | Bentonite | – | 9.0% " |

The green boards were produced, then air matured for 3 days, autoclaved for 24 hours and dried for 12 hours. The board had a density of 1400kg/m$^3$, modulus of rupture 18.5 MN/m$^2$ and impact resistance of 10.0 KJ/m$^2$.

Similar products to those described above can be made by replacing the polypropylene fibres with Nylon fibres or with Kevlar aromatic amide fibres.

The processed cotton used in each compositions (a) to (j) was manufactured by treating cotton linters which had been subjected to a chemical digestion process. In each case an aqueous slurry of the treated linters was made up in a hydrapulper at 2-4% consistency, and then this slurry was passed through a refiner a number of times until the desired freeness was obtained. We have used both Strecker and Claflin refiners for this purpose.

The non-asbestos composition described herein is also useful for the production of slabs and tiles by, e.g. casting or injection moulding, and such products are intended to be encompassed within the term "board or sheet product".

We have found that the use of processed cotton to manufacture boards and sheets in the manner described above leads to products which have considerably greater strength than similar boards and sheets made using wood pulp fibres.

0033796

- 9 -

The advantages of the present products over those produced
with wood pulp fibres are particularly seen in the wet
strength of the present products.  Thus, not only are the
present products considerably stronger  than those made
with wood pulp fibres, but also they retain a much higher
proportion of this strength when wet.

CLAIMS:

1. A board or sheet product having a density of at least 1300 Kg/m$^3$ and formed from a non-asbestos composition comprising (i) an inorganic binder or the precursors thereof in an amount of at least 75% of the composition on a dry weight basis, and (ii) from 2 to 25%, on the same basis, of cotton having a freeness of 20-80$^o$ (Schopper Riegler).

2. A product as claimed in claim 1 wherein the cotton comprises first cut linters.

3. A product as claimed in claim 1 or 2 wherein the cotton is chemically processed.

4. A product as claimed in claim 1 wherein the cotton comprises staple cotton fibre or textile waste.

5. A product as claimed in any of claims 1 to 4 wherein the cotton is processed to a freeness of 25-40$^o$ (Schopper Riegler).

6. A product as claimed in any of claims 1 to 5 wherein the cotton is present in the composition in an amount of 4 to 15%, on a dry weight basis.

7. A product as claimed in claim 6 wherein the cotton is present in an amount of 5 to 12%, on a dry weight basis.

8. A product as claimed in any of claims 1 to 7 wherein the inorganic binder is ordinary Portland cement.

9. A product as claimed in any of claims 1 to 8 wherein the non-asbestos composition further comprises synthetic organic fibres.

10. A product as claimed in claim 9 wherein the organic fibres are polypropylene fibres.

11. A product as claimed in claim 10 wherein the polypropylene fibres are drawn filaments of length 5 to 40mm. and denier 5 to 4000.

12. A product as claimed in claim 10 wherein the polypropylene fibres are in fibrillated form.

13. A product as claimed in claim 9 wherein the organic fibres are fibres of nylon, polyester, polyvinyl chloride

0033796

- 11 -

or high tenacity rayon.

14.  A product as claimed in any of claims 9 to 13 wherein the organic fibres are present in the composition in an amount of 0.1 to 5%, on a dry weight basis.

15.  A product as claimed in claim 14 wherein the organic fibres are present in an amount of 0.1 to 2%, on a dry weight basis.

16.  A product as claimed in any of claims 1 to 15, in the form of a corrugated sheet.

17.  A process for producing a board or sheet product comprising forming a wet pulp from the composition specified in any of claims 1 to 15, forming said pulp into the desired shape, and causing said inorganic binder to set.

18.  A non-asbestos composition comprising (i) an inorganic binder or the precursors thereof in an amount of at least 75% of the composition on a dry weight basis, and (ii) from 2 to 25%, on the same basis, of cotton having a freeness of 20 to $80^{o}$ (Schopper Riegler).